(19) Europäisches Patentamt
European Patent Office
Office européen des brevets

(11) EP 2 891 401 A2

(12) **EUROPEAN PATENT APPLICATION**

(43) Date of publication:
08.07.2015 Bulletin 2015/28

(51) Int Cl.:
*A01K 1/015* (2006.01)

(21) Application number: 14196040.1

(22) Date of filing: 03.12.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 04.12.2013 CA 2835579
28.01.2014 CA 2840686

(71) Applicant: Normerica Inc.
Port Credit, Ontario L5G 4S1 (CA)

(72) Inventor: Seguin, Kari
Dundas, Ontario L9H 3W7 (CA)

(74) Representative: Prinz & Partner mbB
Patent- und Rechtsanwälte
Rundfunkplatz 2
80335 München (DE)

(54) **Lightweight Animal Litter**

(57) A lightweight animal litter composition is provided that comprises an absorbent clumping clay; a non-swelling ground mineral; and an absorbent organic fiber which is preferably recycled paper particles. The composition comprises a plurality of particles, the components of the composition all being infused into said particles.

FIGURE 1

**Description**

## FIELD OF THE INVENTION

An animal litter composition is presented that is lightweight, includes recyclable materials and clumps upon wetting.

## BACKGROUND OF THE INVENTION

Animal litters are typically kept in litter boxes for the purposes of collecting and disposing of urine and feces of domestic animals. Materials as rudimentary as sand have been used as an animal litter. Early versions of commercial animal litter included clay. Clay litter is much more absorbent than sand, and its larger grain makes it less likely to be tracked from the litter box. Non-clumping animal litters are made of materials such as zeolite, diatomite and sepiolite.

Clumping animal litter is the most used animal litter product on the market. It has the advantage that the entire litter box doesn't need to be emptied after use, as the wetted area agglomerates and can easily be separated from the rest of the litter. The majority of these types of litters utilize sodium bentonite, a swelling clay known to absorb up to ten times its own weight in water. Due to the diminishing availability of good quality sodium bentonite, its cost has dramatically increased. Therefore, in order to make this form of litter more cost effective it is highly desirable to replace a significant portion of the sodium bentonite with another lower cost material.

Minerals such as limestone are a good option as they are readily available and abundant. However, these minerals are non-swelling, and therefore can only replace a small amount of the sodium bentonite in order for the litter to maintain its excellent clumping properties. Another component is therefore required in order to provide a lightweight and cost effective animal litter composition that maintains excellent clumping strength.

There is therefore a need for a lightweight and cost effective animal litter that has superior clumping properties.

## SUMMARY OF THE INVENTION

An animal litter composition is provided that includes an absorbent clumping clay which is preferably an absorbent clumping clay dust that is preferably recycled dust from the cat litter industry and an absorbent organic fiber in the form of wood fibers, wood particles, saw dust, whole grains, legumes, nuts and gymnosperm seeds and/or paper particles, preferably recycled particles.

According to one aspect of the invention, there is provided a lightweight animal litter composition comprising a recycled absorbent clumping clay dust; and paper particles which are preferably recycled paper particles.

According to another aspect of the invention, there is provided a lightweight animal litter composition comprising the following components: an absorbent clumping clay dust; preferably a non-swelling ground mineral; and an absorbent organic fiber, wherein the composition comprises a plurality of particles, the components of the composition all being infused into said particles.

According to another aspect of the invention, there is provided a lightweight animal litter composition comprising: from 20% by weight to 80% by weight of sodium bentonite dust; preferably from of 5% to 25% by weight of minerals; from of 20% to 80% by weight of an absorbent organic fiber which is preferably recycled paper; from of 0.1% to 10% by weight of bacterial enzyme; from of 0.1% to 10% by weight of baking soda; and from of 0.001% to 10% by weight of scent.

According to another aspect of the present invention there is provided a lightweight animal litter composition comprising from 20% by weight to 80% by weight of sodium bentonite dust; from of 5% to 25% by weight of limestone; from of 20% to 80% by weight of recycled paper particles; from of 0.1 % to 10% by weight of bacterial enzyme; from of 0.1% to 10% by weight of baking soda; and from of 0.001% to 10% by weight of scent.

According to another aspect of the invention, there is provided a dust free, ammonia neutralizing, antibacterial animal litter preferably formed largely from recyclable materials that clumps upon wetting. This animal litter is formed to a particular size from pre-conditioned recycled paper and clay. The process of making the litter particles allows the ingredients of the particles to be infused to enhance its ammonia neutralizing and antibacterial capabilities by evenly dispersing the ingredients within the matrix of the particles versus traditional spray application of ingredients onto clay/litter granules.

According to another aspect of the invention, there is provided a lightweight animal litter composition comprising: a recycled absorbent clumping clay dust; and an organic absorbent fiber selected from the group consisting of wood fibers, wood particles, saw dust, whole grains, legumes, nuts, gymnosperm seeds, paper particles, and combinations thereof.

According to another aspect of the invention, there is provided a method for producing a lightweight animal litter composition comprising the following steps:

providing sodium bentonite dust;

providing recycled paper;

providing an aqueous solution;

providing an additional component selected from the group consisting of a pH neutralizer, a deodorizer, a bacterial enzyme and a scent;

preconditioning the recycled paper to form a paper formula;

collecting and grinding the sodium bentonite dust to a size of US Mesh 45 to US Mesh 325, preferably less than US Mesh 70;

premixing the sodium bentonite dust with one of said additional components to form a clay formula;

blending the paper formula with the clay formula to form a blend;

mixing the blend with the aqueous solution to agglomerate the composition into particles with sizes ranging from 4 to 50 US Mesh; and

heat drying the composition.

## IN THE DRAWINGS

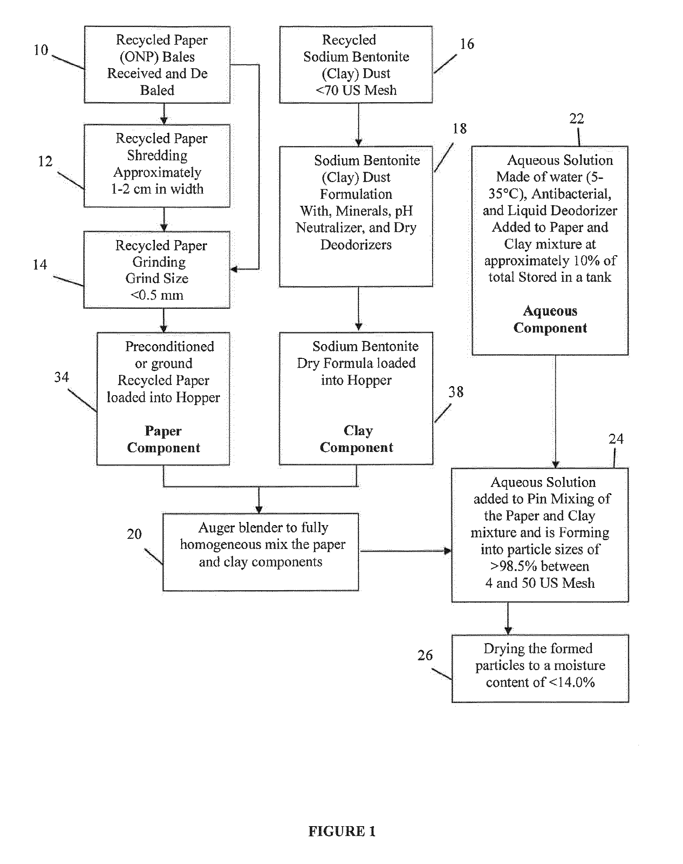

Figure 1 is a flow chart showing a preferred process for making an embodiment of the animal litter of the present invention.

## DETAILED DESCRIPTION OF THE PREFERRED EMBODIMENTS

The present invention is a lightweight animal litter composition that forms clumps upon wetting from waste material by the animal. The animal litter composition comprises an absorbent clumping clay dust or powder, preferably a non-swelling ground mineral and an absorbent organic fiber which is preferably recycled paper particles and most preferably ONP (Old Newspaper) grade 6, 7, 8, and/or 9. The absorbent organic fiber can also include non-recycled paper particles. Preferably, the composition includes an antimicrobial, pH neutralizer and a deodorizer. The components of the composition are homogeneously infused into individual particles of the composition. The wetted animal litter composition agglomerates into a large and stable mass permitting physical separation and removal of the wetted mass of particles from unwetted particles of the composition. Removing the wetted agglomerated composition particles from the remaining unwetted composition reduces or eliminates offensive odors produced by dross soaked particles.

The composition is lightweight and is preferably dust free. The animal litter of the present invention is formed to a particular size from pre-conditioned recycled paper and clay as discussed in more detail below.

The process of making the litter particles allows the ingredients of the composition to be infused into the particles that constitute the composition, to enhance its ammonia neutralizing and antibacterial capabilities by evenly dispersing the ingredients within the matrix of the particles versus traditional spray application of ingredients onto the surface of the clay/litter granules.

The composition is preferably dust free. Dust free means less than about 1% fines are smaller than 100 US Mesh. Also, less than about 1% of clay weight is lost when pouring. In addition, it takes less than 10 seconds for visual airborne dust to dissipate after 2kg of litter has been poured.

The composition includes an absorbent clumping clay which is preferably absorbent clumping clay dust. This can also be referred to as a particulate swelling clay. The absorbent clumping clay is preferably sodium bentonite. Sodium bentonite is provided in the form of sodium bentonite dust. The sodium bentonite dust is preferably obtained from recycled animal litter or other recycled material. As absorbent clumping clay is processed and packaged, it generates airborne dust. The airborne clay dust is then vacuumed away through a series of hoses integrated throughout a processing line. The clay dust is separated out of the air by using a large filter. The clumping clay dust in the air goes to the large filter. The captured dust in the filter is released from the filter into a collection area and is ready for removal and/or recycling. Other clays that form clumps when contacted with water may be used as an absorbent clumping clay for the purposes of the present invention.

The absorbent clumping clay is present in the composition in an amount of about 20% by weight to about 80% by weight of the composition. The preferred content of the absorbent clumping clay is about 45% by weight of the composition.

The lightweight animal litter composition of the present invention preferably includes a non-swelling ground mineral. The preferred non-swelling ground mineral is limestone. Dolomite can also be used as the non-swelling ground mineral for the purposes of the present invention. Other acceptable non-swelling ground minerals for the purposes of the present invention include carbon, graphite, soda ash and gravel.

The non-swelling ground mineral is preferably present in the composition in an amount of about 5% by weight to about 25% by weight of the composition. The preferred content of the non-swelling ground mineral is about 10% by weight of the composition.

The lightweight animal litter composition of the present invention further includes absorbent organic fibers preferably in the form of paper particles which are more preferably recycled paper particles. The recycled paper particles are preferably grade 6 newspapers for recycling, #7ONP (Old Newspaper), #8 ONP, grade 9 (OI or OIN).

Grade 7 (#7 ONP) is de-ink quality news materials for paper recycling are made up of fresh and sorted newspapers that aren't damaged by the sun and don't contain more than the normal percentage of colored sections and rotogravure.

Grade 8 (#8 ONP) is de-ink quality special news materials for paper recycling that consists of fresh sorted newspapers that are free from sun damage. This grade shouldn't include anything other than news materials such as magazines, and is tare-free. It also shouldn't contain more than the normal percentage of colored sections and rotogravure.

Grade 9 (OI or OIN) is over-issue news for paper recycling is comprised of unused, overrun newspaper that's bundled and doesn't contain more than the normal percentage of colored sections and rotogravure.

Other standard recycled paper grades can be used for the purposes of the present invention. Table 1 sets out a summary of the preferred recycled paper grades.

Table 1:

| Preferred Recycled Paper grades | |
| --- | --- |
| **Paper Grade** | **Description** |
| News: Grade 6 | Newspapers for recycling. |
| News, De-Ink Quality: Grade 7 (#7 ONP) | De-ink quality news materials for paper recycling are made up of fresh and sorted newspapers that aren't damaged by the sun and don't contain more than the normal percentage of colored sections and rotogravure. |
| Special News, De-Ink Quality: Grade 8 (#8 ONP) | De-ink quality special news for paper recycling consists of fresh sorted newspapers that are free from sun damage. This grade shouldn't include anything other than news such as magazines, and is tare-free. It also shouldn't contain more than the normal percentage of colored sections and rotogravure. |
| Over-Issue News: Grade 9 (OI or OIN) | Over-issue news for paper recycling is comprised of unused, overrun newspaper that's bundled and doesn't contain more than the normal percentage of colored sections and rotogravure. |

Other grades of recycled paper can be used for the purposes of the present invention such as corrugated containers: Grade 11 (OCC) and Double Sorted Corrugated: Grade 12 (DS OCC). The absorbent organic fibers may comprise wood fibers, wood particles, saw dust or combinations thereof. The wood fibers, wood particles, and saw dust can be derived from any type of wood.

In addition, the absorbent organic fibers can include fibers from whole grains, legumes, nuts and gymnosperm seeds.

Examples of acceptable whole grains include: amaranth, barley, brown rice, buckwheat, bulgur, farro, flaxseed, grano, fonio, palmer's grass, wheat, millet, oat, corn/maize, muesli, quinoa, rye, sorghum, spelt, teff, triticale, wild rice, sesame, pitseed goosefoot, kaniwa, chia and breadnut.

Examples of acceptable legumes include: lentils, beans, bambara groundnut, chickpea, cowpeas, blackeye peas, fava or broad bean, hyacinth bean, lupin, moringa, peas, peanuts, pigeon peas, sterculia peas, velvet peas, winged peas, yarn beans, and soybeans.

Examples of acceptable nuts include: acorn, amond, beech, brazil nut, candlenut, cashews, chestnuts (Chinese and sweet), chilean hazel, coconut, egusi and other melon seeds, colocynth, malabar gourd, pepita, ugu, hazelnuts - filbert, hickory - pecan, kola nut, macadamia nut, malabar nut, malabar chestnut, mamoncillo, mongongo, ogbono, paradise nut, pili, pistachio, walnut - black walnut, water chestnut, and shagbark hickory.

Examples of acceptable gymnosperm seeds include: cycads, ginkgo, gnetum, juniper, monkeypuzzle, pine nuts, chilgoza pine, Korean pine, Mexican pinyon, pinon pine, singel-leaf pinyon, stone pine, and podocarps.

Other acceptable whole grains, legumes, nuts and gymnosperm seeds include: cempedak, cocoa bean, coffee bean, fox nut, hemp, jackfruit, lotus seed and sunflower.

The absorbent organic fibers are present in the composition in an amount of about 20% by weight to about 80% by weight of the composition. The preferred content of the absorbent organic fibers is about 45% by weight of the composition.

The absorbent clumping clay, preferably the non-swelling ground mineral and the absorbent organic fibers are formed together in particles in the animal litter composition. A preferred embodiment of the animal litter composition includes sodium bentonite dust, non-swelling ground minerals and paper particles. Table 2 sets out the preferred physical properties of the particles including ideal size distribution, density and moisture levels.

Table 2: Physical Properties

| Ingredient | +10 USMesh 2.00mm 0.0787" | +40 USMesh 425μm 0.0165" | +50 USMesh 300μm 0.0117" | +70 USMesh 212 μm 0.0033" | -70/Pan USMesh 212 μm 0.0033" | Density (lbs/ ft$^3$) | Moisture (%) |
|---|---|---|---|---|---|---|---|
| Sodium Bentonite dust | 0.0% | 0.0% | 0.0% | <0.5% | 100% | 60-64 | 8-14% |
| Non-Swelling Ground Minerals | 0.0% | 0.0% | 0.0% | <0.5% | 100% | 60 -75 | 8-14% |
| Paper Particles | <10.0% | >85.0% | <5.0% | <2.0% | <1.0% | 5-10 | 4-18% |

The composition preferably includes a bacterial enzyme that lyses the cell membranes of bacteria thereby destroying bacteria that can be present in the litter after it has been used. This has the result of reducing the amount of bacteria in the composition and the resultant odor caused thereby. The bacterial enzyme is preferably present in an amount of about 0.1% by weight to about 10% by weight of the composition. The preferred content of the bacterial enzyme is about 0.5% by weight of the composition.

The composition preferably includes a pH neutralizer that acts as a buffer to maintain the pH of the composition that avoids the formation of ammonia from urine which forms at higher pH levels producing unpleasant smells. The preferred pH neutralizer is baking soda. However, a person skilled in the art will appreciate that other pH neutralizers can be used. The pH neutralizer is preferably present in an amount of about 0.1% by weight to about 10% by weight of the composition. The preferred content of the pH neutralizer is about 0.5% by weight of the composition.

The composition further preferably includes a deodorizer. The deodorizer can be cedar scent for example or essential oils. Preferred deodorizers include cedar, pine and other fragrances. The deodorizer is preferably present in an amount of about 0.001% by weight to about 10% by weight of the composition. The preferred content of the deodorizer is about 0.05% by weight of the composition.

As a result of infusing the components of the composition into the particles of the formulation, a homogenous mixture of the components is provided in each particle of the composition throughout the composition.

A preferred animal litter formulation of the present invention is set out in Table 3:

Table 3

| Ingredient | Inclusion (%w/w) |
|---|---|
| Clumping Clay/Sodium Bentonite | 44.62% |
| Minerals/Limestone | 10.00% |
| Recycled Paper/Ground Paper | 44.61% |
| Antibacterial/Bacterial Enzyme | 0.20% |
| pH Neutralizer/Baking Soda | 0.50% |
| Deodorizer/Scent | 0.07% |

The components of the animal litter formulation are infused into individual particles. After blending, the composition is preferably a granular mix of particles. The finished product is dark grey in color with zero airborne dust, a bulk density of 30-45lbs/ft$^3$ which is half of the bulk density of standard clumping litter. The composition preferably includes sodium bentonite dust, preferably ground minerals, odor control, pH neutralizing and deodorizing capabilities.

In processing the components of the animal litter formulation, recycled paper products are pre-conditioned before blending by shredding the paper product first followed by grinding the paper product to 0.5mm particle size. Similarly, the absorbent clumping clay dust, ground minerals, pH neutralizer, and dry deodorizer formula are ground to a size of less than US Mesh 70 and premixed prior to blending with the pre-conditioned paper product formula. The recycled paper and clay dust formula are then blended together and finally mixed with the aqueous formulation of water, liquid pH neutralizer, liquid scent and antimicrobial agent. All three components come together into a pin mixer where the components are agglomerated into particles with sizes ranging from 8 to 50 US Mesh. The particles are then heat dried preferably using a gas fired, indirect heat drum dryer until they reach the ideal moisture content of 4 - 18%. However, other dryers can be used for the drying step.

A preferred method for producing an embodiment of the animal litter of the present invention is depicted in the flow chart shown in Figure 1. The three components are recycled paper (ONP), recycled sodium bentonite (clay) dust and an aqueous solution made of water, antibacterial, and liquid deodorizer.

As a first step, bales of recycled paper ONP are provided 10. The bales of recycled paper are received and de-baled. The recycled paper may then be pre-conditioned by shredding to approximately 1-2 cm in width as indicated at 12. The next step 14 involves grinding the recycled paper to a grind size of less than 0.5mm. Alternatively the step indicated at 14 may directly follow the step indicated at 10 of providing bales of recycled paper ONP. The step indicated at 34 is loading the pre-conditioned or ground recycled paper into a hopper. Step 34 yields the paper component of the animal litter.

Concurrently, recycled sodium bentonite dust/mineral is provided 16 having <70 US Mesh. A following step 18 involves the formulating the sodium bentonite (clay) dust with minerals, pH neutralizer, and dry deodorizer to provide a sodium bentonite (clay) dust formulation.

As shown at 38 the sodium bentonite dry formula is loaded in a hopper to provide the clay component of the animal litter.

The next step 20 is the mixing of the paper component and the clay component of the animal litter formulation to form a blend. This is preferably carried out in an auger blender to homogeneously mix the paper and clay components thereby forming a paper and clay mixture. Other mixing methods known in the art may also be employed for this step.

Step 22 provides an aqueous solution made of water at 5-35°C, antibacterial, and liquid deodorizer and adding the aqueous solution to the recycled paper and clay dust mixture at approximately 10% of total stored in a tank. The clay dust and recycled paper form 90% of total stored in a tank and the aqueous solution forms 10%. All are added to the pin mixer. Following step 22, in step 24 the components including the blend and the aqueous solution are then added to a pin mixer for pin mixing of the paper and clay mixture for forming into particle sizes of >95% between 4 and 50 US Mesh. Step 24 is preferably carried out at 1- 25°C.

Step 26 follows which involves drying the formed particles to a moisture content of <14.0%. The drying step is preferably carried out in a drum dryer. Once the paper/clay animal litter particles are formed into small spherical granules from the pin mixer, they are then continuously fed into the drum dryer where they can gently roll in the cylinder for a specific period of time. This time depends on load size. The angle of the barrel can be adjusted to ensure that the amount going in is the same as the amount going out.

**EXAMPLES**

Example 1: Standard Sodium Bentonite Litter vs Lightweight Agglomerated Animal Litter of the Present Invention

OBJECTIVES: To compare agglomerated animal litter of the present invention at four different formulations to standard clumping sodium bentonite litter for appearance and functionality.

MATERIALS:

1. Standard Sodium Bentonite Litter
2. Agglomeration Formula 1- 25% Highly ground ONP #8 : 75% Sodium Bentonite dust
3. Agglomeration Formula 2 - 50% Highly ground ONP #8 : 50% Sodium Bentonite dust
4. Agglomeration Formula 3 - 25% Highly ground OCC #11 : 75% Sodium Bentonite dust
5. Agglomeration Formula 4 - 50% Highly ground OCC #11 : 50% Sodium Bentonite dust Sufficient water for processing

PROCEDURES:

1 Sieve Testing

1.0 SCOPE

This procedure is applicable to all finished product or raw material, 10/40 and 12/40 mesh sized, sodium bentonite. The Sieve Analysis of the sodium bentonite is to ensure that the sodium bentonite types meets the standards.

2.0 <u>EQUIPMENT</u>

2.1 Mesh Sizes - #10 or 12, 40, 50, 70, sieve pan and lid - sequence for 10/40 and 12/40 raw material sodium bentonite respectively.
2.2 Mesh Sizes - #40, 50, 70, sieve pan and lid - sequence for finished product sodium bentonite
2.3 Sieve Shaker
2.4 Steel bowl
2.5 PG5002-S scale, Balance (accurate to 0.01g)

3.0 <u>PROCEDURE</u>

3.1 Stack from top to bottom: the sieve lid, # 10 mesh or # 12 mesh, (depending on the 10 or 12 sized clay respectively), followed by # 40 mesh, # 50 mesh, # 70 mesh and the pan.
3.2 Weigh out 500 g of sodium bentonite in a tarred lab sample tray.
3.3 Remove the sieve lid from the stack of sieves and transfer the 500 g of sodium bentonite to the # 10 Mesh sieve.
3.4 Replace the sieve lid back onto the stack of sieves.
3.5 Place the stack of sieves onto the seat of the shaker units.
3.6 Secure the stack onto the sieve shaker.
3.7 Turn the timer to 10 minutes.
3.8 Once machine has completed the 10-minute cycle, remove the stack.
3.9 Remove each sieve and weigh the contents.
3.10 Calculate the % Weight of each sieve content as follows:

<u>STEP 1</u>

Total Sample Weight is calculated by adding each of the Individual Sieve Weights together.

<u>Sample Calculation</u>

Individual Sieve Weight

# 40 Mesh = 497.06 g, # 50 Mesh = 2.13 g, # 70 Mesh = 0.16 g, Pan = 0.65 g
Total Sample Weight = 497.06 g + 2.13 g + 0.16 g + 0.65 g = 500.54 g

<u>STEP 2</u>

Each Individual Sieve Weight by Percent is calculated by taking each Individual Sieve Weight, dividing it by the Total Sample Weight and multiplying it by 100.

<u>Sample Calculation</u>

$$\text{Individual Sieve Weight by Percent} = \frac{\text{Sieve Weight}}{\text{Total Sample Weight}} \times 100\%$$

$$= \frac{497.06g}{500.54g}$$

$$= 99.3\%$$

3.11 Repeat steps 2 for each Individual Sieve Weight to calculate each Individual Sieve Weight by Percent.

4.0 RECORD

4.1 Record the results

5.0 SPECIFICATION

| 5.1 | + # 10 Mesh | 20.0% Maximum |
|-----|-------------|---------------|
| 5.2 | + # 40 Mesh | 98.5% +/- 2.0% |
| 5.3 | - # 40 / + # 50 Mesh | 1.5% +/- 0.5% |
| 5.4 | - # 50 / + # 70 Mesh | 1.5% +/- 0.5% |
| 5.5 | - # 70 Mesh / Pan | 0.5% +/- 0.5% |

2. Percent Moisture

1.0 SCOPE

This procedure is applicable to all finished product or raw material, 10/40 and 12/40 mesh sized, sodium bentonite. Percent Moisture analysis provides information on the clay's ability to absorb.

2.0 EQUIPMENT

2.1 Satorius - Moisture Analyzer MA 30

3.0 PROCEDURE

3.1 Turn on unit by pressing On/Tare.
3.2 Parameters should be set for 130°C and Auto time. See below as to how to change parameters.
3.3 Lift hood and position disposable aluminum tray on the internal scale 3.4 Press enter and the display will zero and beep at the same time.
3.5 Weigh out 10 g of sample onto the tray, making sure the product is distributed evenly on the tray.
3.6 Close the lid of the Satorius Moisture balance to start the test.
3.7 Changing Parameters:
3.8 To change parameter Press CF the display shows, press F1 for a higher temperature and F2 for lower temperature. Press enter to accept this temperature.
3.9 To change shutoff time press F1 to increase or F2 to decrease the time. 0.0 min:auto indicates the time will shut off when the temperature of the product does not change.
3.10 Press enter to accept this time.

4.0 RECORD

4.2 Record the results;

5.0 SPECIFICATION

5.1 Sodium Bentonite <12.0% Maximum

3. Absorption

Absorption is measured by methods known in the art.

4. Density

1.0 SCOPE

This procedure is applicable to all finished product or raw material, 10/40 and 12/40 mesh sized, sodium bentonite. Density analysis provides information on the fill capability of the product. By monitoring density rates, one can ensure proper fill and reduce overfill spillage in the containers.

2.0 EQUIPMENT

2.1 Seedburo Filling Hopper and stand.
2.2 Pint Cup
2.3 Strike- off stick
2.4 PG5002-S scale, Balance (accurate to 0.01g)

3.0 PROCEDURE

3.1 Pour the sample of Clay into the Seedburo filling Hopper.
3.2 Weigh the empty Pint Container.
3.3 Open slide gate at bottom of the Hopper. Let the clay overfill the one-pint dry measure container.
3.4 Make two passes with the Strike - Off stick at the top of the one-pint dry measure container, to remove all overfilled material.
3.5 Weigh the sample on the balance.
3.6 Calculate the weight of the sample by following the calculation below.
Density = Sample Weight x 0.1130 lb/ft$^3$

4.0 RECORD

4.3 Record the results

5.0 SPECIFICATION

5.1 Sodium Bentonite - 70 1b/ft$^3$ +/- 10 1b/ft$^3$

5. Airborne Dust

1.0 SCOPE
This procedure is applicable to all finished product or raw material, 10/40 and 12/40 mesh sized, sodium bentonite. The Airborne Dust Analysis of the sodium bentonite provides information on the dust content and must confirm the sodium bentonite meets standards as well as monitors the dust collection system for the Clay Handling System.

2.0 EQUIPMENT

2.1 Plastic container - 250ml size.
2.2 Tray

3.0 PROCEDURE

3.1 Take a 250g sample of clay.
3.2 Continuously pour the 250 g sample of clay from a height of 14" into a second container (this should take approximately 3 seconds to pour 250 g sample of clay).
3.3 Measure the time it takes for the dust generated from pouring to dissipate; measure time in seconds.

4.0 RECORD

5.1 Record the results.

6.0 SPECIFICATION

5.1 Bentonite - 10 seconds Maximum.

6. Odour Control

1.0 SCOPE

This procedure is applicable to all finished product or raw material, 10/40 and 12/40 mesh sized, sodium bentonite. The Odor Control Analysis of the sodium bentonite provides information on the clay's ability to remove odor over a defined period of time.

2.0 EQUIPMENT

2.1 250ml container with lid
2.2 Self Zeroing 50ml burette
2.3 10% Ammonia solution
2.4 Wax pencil

3.0 PROCEDURE

3.1 Take a 200g sample of Sodium Bentonite and place it in a 250ml container with a lid.
3.2 Using the burette with the dispensing end 2 inches from the surface of the sodium bentonite sample, gently dispense 15ml of the 10 % Ammonia solution.
3.3 After dispensing the ammonia solution, assess the odor immediately by sniffing the surface of the sample without disrupting it.
3.4 Record the results on the appropriate QA form.
3.5 The odor is graded on a 10-point scale, 1 - strong ammonia odor and 10 - no ammonia odor.
3.6 Assess the odor and grade at 24 and 48 hours.
3.7 Record the results on the appropriate QA form.

4.0 RECORD

5.2 Record the results

7.0 SPECIFICATION

5.1 Sodium Bentonite 0 hour - 5, 24 hour - 7, 48 hour - 9

RESULTS AND DISCUSSION:

| Analysis | | Standard Sodium Bentonite Litter | Agglomeration | | | |
|---|---|---|---|---|---|---|
| | | | Formula 1 250NP:75SB | Formula 2 500NP:50SB | Formula 3 250CC:75SB | Formula 4 500CC:50SB |
| Colour | | Blue/Grev | Grev | Grev | Grev | Grev |
| Scent | | Unscented | Unscented | Unscented | Unscented | Unscented |
| Particle Size/ Sieve Analysis | US +10 | 20.0 | 40.0 | 26.0 | | |
| | US +40 | 98.5 | | | | |
| | US -40/+50 | 1.5 | | | | |
| | US -50/+70 | 0.5 | | | | |
| | -70/PAN | 0.2 | 0.1 | 0 | 0.1 | 0.1 |
| Moisture (%) | | <12.0% | <12.0 | <12.0 | <12.0 | <12.0 |
| Clump Weight | | 40.0 | 52.5 | 33.0 | 46.5 | 37.0 |
| Clump Weight | | | 51.5 | 32.0 | 46.0 | 35.5 |
| Clump Strength | | | 98.1 | 97.0 | 98.9 | 95.9 |
| Bulk Density | | 63.0 | 57.3 | 43.1 | 60.1 | 49.7 |
| Airborne Dust | | 5-7 | 0-1 | 0-1 | 0-1 | 0-1 |
| Odour Control | 0-1 Hour | 5-9 | Good | Good | Accept | Poor |
| | 24 Hour | 7-10 | Good | Good | Accept | Poor |
| | 48 Hour | 9-10 | Good | Good | Poor | Poor |
| [1]Before Drop Test    [2]After Drop Test        [3]Odour Control: 1= poor odour control, 10= excellent odour control | | | | | | |

CONCLUSIONS:

1. Colour

Formula 1 and 2 (ONP) are acceptable grey colour whereas Formula 3 and 4 (OCC) are unacceptable yellow brown colour.

2. Sieve Test

Formula 1 and 2 (ONP) are acceptable uniform, spherical granules and similar particle size distribution to standard sodium bentonite. Formula 3 and 4 (OCC) are unacceptable due to the irregular large chunks and high level on non-spherical granules.

3. Clump Strength and Weight

All 4 Formulas clumped well. Formula 2 performed the best for clump weight compared to the target of 30 g.

4. Moisture

All samples had a moisture content of <12.0%,

5. Bulk Density

Formula 2 had the lowest bulk density result.

6. Airborne Dust

All Formulas proved to be dust free do to the compact nature of the particle compared to standard sodium bentonite.

7. Odour Control

Formula 1 and 2 performed better for odour control.

Example 2: Pelletization Testing

Pelletization testing was conducted on postconsumer paper and bentonite. The objective was to produce 100 pounds of durable, low density, clumping, minus 4 X plus 18 mesh pellets, as dried to 8 to 14 per cent moisture content.
Approximately 58 pounds of postconsumer paper and 192 pounds of AQUAGEL GOLD SEAL® sodium bentonite were available for testing. Materials were blended for testing utilizing a 2.3 ft$^3$ mixing capacity concrete mixer.

**Raw Material Data**

The postconsumer paper and bentonite raw materials were analyzed, as received and as tested, for moisture content, bulk density (table 2.1), and particle size distribution (table 2.2).

**TABLE 2.1:** Raw Material Properties

| Raw Material | % Moisture Content | Bulk Density | | | |
| --- | --- | --- | --- | --- | --- |
| | | *(aerated)* | | *(compacted)* | |
| ID | | *lb/ft$^3$* | *kg/l* | *lb/ft$^3$* | *kg/l* |
| sodium bentonite | 13.1% | 46.5 | 0.745 | 62.3 | 0.998 |
| 40:60 paper to bentonite | 9.7% | 4.1 | 0.066 | 5.4 | 0.087 |

**TABLE 2.2:** Raw Material Particle Size Distribution

| Sieve | | Sodium Bentonite | |
| --- | --- | --- | --- |
| | | Retained | Cumulative |
| Mesh | *mm* | | |
| 10 | *2.000* | 0.0% | 0.0% |
| 45 | *0.354* | 0.3% | 0.3% |
| 80 | *0.177* | 2.8% | 3.1% |
| 120 | *0.125* | 5.5% | 8.6% |
| 200 | *0.074* | 18.1% | 26.6% |
| 325 | *0.044* | 40.3% | 66.9% |
| Pan | *0.000* | 33.1% | 100.0% |
| | | *96.9% minus* 80 *mesh* | |

**Test Results**

Representative green pellets were ambient air dried and analyzed for moisture content, bulk density, attrition loss, *(see table 2.4)*, and particle size distribution *(see table 2.5)*. A Mettler Toledo HR83-P Moisture Analyzer, set at 120°C, standard *(constant temperature)* drying program and switch-off criterion 5 (i.e. *1 mg per 140 seconds)*, was utilized. Bulk density analysis was conducted on the pellets as discharged. Attrition analysis measured per cent losses from minus 7 X plus 10 mesh pellets after 5 minutes on a 25 mesh screen in a Ro-Tap® test sieve shaker.

**TABLE 2.4:** Pellet Properties

| Test % Run | Moisture Content | Bulk Density | | | | % Attrition Loss |
| --- | --- | --- | --- | --- | --- | --- |
| | | *(aerated)* | | *(compacted)* | | |
| | | *lb/ft$^3$* | *kg/l* | *lb/ft$^3$* | *kg/l* | |

(continued)

| Test % Run | Moisture Content | Bulk Density | | % Attrition Loss |
|---|---|---|---|---|
| | | *(aerated)* | *(compacted)* | |
| 3 | 8.9% | 32.4 0.519 | 39.5 0.633 | 0.0% |

**TABLE 2.5:** Pellet Size Distribution

| | | **Run 3** | |
|---|---|---|---|
| **Sieve** | | **40:60 Paper to Bentonite** | |
| | | 8.9% *Moisture Content,* | |
| **US Mesh** | *mm* | **Retained** | **Cumulative** |
| **4** | *4.760* | 1.1% | 1.1% |
| **5** | *4.000* | 2.7% | 3.8% |
| **7** | *2.830* | 17.9% | 21.7% |
| **10** | *2.000* | 37.1% | 58.8% |
| **14** | *1.410* | 28.8% | 87.6% |
| **18** | *1.000* | 9.4% | 97.1% |
| **Pan** | *0.000* | 2.9% | 100.0% |

*96.0% -6 X +18 mesh*

**Conclusions**

Durable, low density, clumping, minus 4 X plus 18 mesh pellets, dried to 8.9 per cent moisture content (tables2.4 and 2.5), as judged by measurements of 32.4 lb/ft$^3$ *(0.52 kg/l)* aerated and 39.5 lb/ft$^3$ *(0.63 kg/l)* compacted bulk density, 0.0% attrition loss (table 2.4), and successful clumping trials, were produced from 40:60 postconsumer paper to sodium bentonite (tables 2.1 and 2.2), with a 12D54L Pin Mixer (see table 2.4).

Approximately 100 pounds of sample pellets were produced.

Example 3: Pelletization Testing

Pelletization testing was conducted on recycled paper and sodium bentonite. The objectives were to produce 1) 200 pounds of durable, low density, clumping, minus 8 X plus 18 mesh pellets, as dried to 10 to 12 per cent moisture content, made from a mixture of 40:60 paper to bentonite, having up to 0.5% xanthan gum content, and 2) 50 pounds of similar pellets, having up to 1.0% xanthan gum content.

Approximately 180 pounds of compacted recycled paper *(Climatizer Insulation cellulose fiber)*, 220 pounds of Aquagel Gold Seal® sodium bentonite, and three pounds of food grade xanthan gum (*Neimenggu Fufeng Biotechnologies Co., Ltd., batch no. M1205A-G19)*, were available for testing. Materials were blended for testing utilizing a one cubic yard capacity concrete mixer.

**Raw Material Data**

The recycled paper, sodium bentonite and xanthan gum raw materials were analyzed, as received and as tested, for moisture content, bulk density (table 3.1), and particle size distribution (table 3.2).

**TABLE 3.1:** Raw Material Properties

| Raw Material | % Moisture Content | Bulk Density | | | |
|---|---|---|---|---|---|
| | | *(aerated)* | | *(compacted)* | |
| *ID* | | *lb/ft$^3$* | *kg/l* | *lb/ft$^3$* | *kg/l* |
| recycled paper | 6.6% | 2.9 | 0.047 | 7.5 | 0.120 |
| sodium bentonite | 13.1% | 46.5 | 0.745 | 62.3 | 0.998 |
| 40:60 paper to bentonite | 9.7% | 5.6 | 0.090 | | |
| xanthan gum | 11.4% | | | | |

(continued)

**TABLE 3.2:** Raw Material Particle Size Distribution

| Sieve | | Sodium Bentonite | |
| | | as received | |
| Mesh | mm | Retained | Cumulative |
|---|---|---|---|
| 10 | 2.000 | 0.0% | 0.0% |
| 45 | 0.354 | 0.3% | 0.3% |
| 80 | 0.177 | 2.8% | 3.1% |
| 120 | 0.125 | 5.5% | 8.6% |
| 200 | 0.074 | 18.1% | 26.6% |
| 325 | 0.044 | 40.3% | 66.9% |
| Pan | 0.000 | 33.1% | 100.0% |
| | | | 96.9% minus 80 mesh |

**Test Parameters and Conditions**

**12D54L Pin Mixer Testing**

A 12D54L Pin Mixer was utilized for testing the recycled paper to sodium bentonite mixtures, using 0.25% and 0.50% xanthan gum, in aqueous solution, as liquid binders (table 3.3). The recycled paper was received in compacted blocks that had to be broken up prior to mixing with the bentonite.

A pin mixer is a high speed, conditioning and micro-pelletizing device that converts powders into small agglomerates through the action of a high speed rotor shaft and pin assembly and the addition of liquids such as water, binders, oil or surfactants. The 12D54L Pin Mixer has a 12" diameter by 54" long mixing chamber, with two available binder nozzle ports. Its maximum feed throughput is 40 cubic feet per hour.

The first port was used for liquid binder addition. The first two numbers of the nozzle tip size represent the angle of the flat spray. The remaining numbers indicate the flow rate. The 4004 nozzle tip applies 0.4 gallons of water per minute in a 40 degree spray pattern (at 40 PSI).

Test parameters and conditions for the pin mixer operation are tabulated below (see table 3).

**TABLE 3.3:** 12D54L Pin Mixer Parameters and Conditions

| Test | Feed | | Liquid Binder | | | | | Pin Mixer | | | Green Pellets | | |
| Run | Rate | | ID | Nozzle | p | Rate | | f | P | T | % MC | ABD | |
| | $ft^3$/hr | lb/min | | tip | PSI | gal/min | lb/min | RPM | HP | °C | | $lb/ft^3$ | kg/l |
|---|---|---|---|---|---|---|---|---|---|---|---|---|---|
| 1 | 39.6 | 3.70 | 0.25 | 4004 | 8 | 0.191 | 1.596 | 1016 | 13 | 37 | 37.4% | 42.5 | 0.680 |
| 2 | 39.6 | 3.70 | 0.50 | 4004 | 10 | 0.199 | 1.664 | 1016 | 14 | 41 | 32.8% | 38.6 | 0.618 |

0.25 = 0.25% xanthan gum, aqueous solution; 0.50 = 0.50% xanthan gum, aqueous solution;
p = pressure; f = rotational frequency; P = power; T = temperature; MC = moisture content;
ABD = aerated bulk density

**Test Results**

Representative green pellets were exposed to ambient air to dry and then analyzed for moisture content, bulk density, clump strength, (table 3.4), and particle size distribution (table 3.5). A Mettler Toledo HR83-P Moisture Analyzer, set at 120°C, standard (constant temperature) drying program and switch-off criterion 5 (i.e. 1 mg per 140 seconds), was utilized. Bulk density analysis was conducted on the pellets as discharged. Clump strength analysis measured the per cent weight intact portion of each 24 hour aged, syringe-generated clump, after having been dropped from 14 inches into a steel bowl.

**TABLE 3.4:** Pellet Properties

| Test Run | % Xanthan Gum Solids | % Moisture Content | Bulk Density | | | | % Clump Strength |
| | | | (aerated) | | (compacted) | | |
| | dry content | | $lb/ft^3$ | kg/l | $lb/ft^3$ | kg/l | |
|---|---|---|---|---|---|---|---|
| 1 | 0.11% | 7.6% | 44.9 | 0.719 | 50.3 | 0.805 | 95.8% |

(continued)

| Test Run | % Xanthan Gum Solids | % Moisture Content | Bulk Density | | | | % Clump Strength |
|---|---|---|---|---|---|---|---|
| | | | (aerated) | | (compacted) | | |
| | *dry content* | | lb/ft³ | kg/l | lb/ft³ | kg/l | |
| **2** | 0.22% | 10.0% | 42.8 | 0.686 | 51.0 | 0.817 | 98.2% |

**TABLE 3.5:** Pellet Size Distribution **Run**

| Sieve | | *0.11% Xanthan Gum, Dry Content; 7.6% Moisture Content,* | | *0.22% Xanthan Gum, Dry Content; 10.0% Moisture Content,* | |
|---|---|---|---|---|---|
| **Mesh** | *mm* | **Retained** | **Cumulative** | **Retained** | **Cumulative** |
| **6** | *3.360* | 5.0% | 5.0% | 1.7% | 1.7% |
| **8** | *2.380* | 33.8% | 38.8% | 19.1% | 20.8% |
| **10** | *2.000* | 21.3% | 60.1% | 19.0% | 39.9% |
| **14** | *1.410* | 29.0% | 89.1% | 36.2% | 76.0% |
| **18** | *1.000* | 11.1% | 100.2% | 16.5% | 92.6% |
| **40** | *0.420* | 4.7% | 104.9% | 8.9% | 101.5% |
| **pan** | *0.000* | 0.1% | 105.0% | 0.3% | 101.7% |
| | | *61.4% -8 X + 18 mesh* | | *71.7% -8 X +18 mesh* | |

**Conclusions**

Durable, low density, clumping, minus 8 X plus 18 mesh pellets (table 3.5), as judged by measurements of 43 to 45 lb/ft³ aerated and 50 to 51 lb/ft³ compacted bulk densities, and 96 to 98 per cent clump strengths (table 3.4), were produced from 40:60 recycled paper to sodium bentonite, with added xanthan gum (see tables 3.1 and 3.2), with a 12D54L Pin Mixer (table 3.3).

The three pounds of xanthan gum was not sufficient to accommodate an auger feeder; so, the xanthan gum was added in solution as liquid binder. Due to the resultant increase in viscosity of the liquid binder upon addition of xanthan gum to the water, the concentration, sufficient to produce pellets having the prescribed 0.5% xanthan gum solids dry content, was too thick for application through a conventional binder tank and spray nozzle. Instead, 0.25% and 0.50% xanthan gum aqueous solutions were applied to the raw material in the pin mixer, resulting in pellets having 0.1% xanthan gum solids, dry content, from run 1, and 0.2% from run 2. Approximately 225 pounds pellets from test run 1 and 72 pounds of pellets from test run 2 were produced.

It will be appreciated that a person skilled in the art can make various changes and modifications to the invention to adapt it to various usages and conditions. As such, these changes and modifications are within the scope of the present invention. The scope of the claims should not be limited by the preferred embodiments set forth in the preferred embodiments, but should be given the broadest interpretation consistent with the description as a whole.

**Claims**

1. A lightweight animal litter composition comprising:

   a recycled absorbent clumping clay dust; and
   paper particles.

2. The lightweight animal litter composition according to claim 1 wherein the paper particles are recycled paper particles.

3. The lightweight animal litter composition according to claim 1 wherein the recycled paper particles are selected from the group consisting of news grade 6, ONP (Old Newspaper) 7, ONP 8, ONP 9, OCC and other recycled paper products.

4. The lightweight animal litter composition according to claim 1 wherein the absorbent clumping clay dust is selected from the group consisting of sodium bentonite, calcium bentonite, Fuller's earth and Montmorillonites.

**5.** The lightweight animal litter composition according to claim 1 further comprising a non-swelling ground mineral.

**6.** The lightweight animal litter composition according to claim 5 wherein the non-swelling ground mineral is selected from the group consisting of coarse ground material, limestone, gravel, calcite, soda ash and dolomite.

**7.** The lightweight animal litter composition according to claim 5 wherein the absorbent clumping clay dust is present in an amount of 20% to 80% by weight of the composition; the non-swelling ground mineral is present in an amount of 5% to 72% by weight of the composition; and the paper particles are present in an amount of 5% to 50% by weight of the composition.

**8.** The lightweight animal litter composition according to claim 1 wherein the absorbent clumping clay dust is sodium bentonite dust comprising particles that are sized such that less than 0.5% by weight of the particles have a US mesh size of smaller than 45, preferably less than 0.5% by weight of the particles have a US mesh size of smaller than 70.

**9.** The lightweight animal litter composition according to claim 1 wherein the paper particles comprise particles that are sized such that less than 10% of the particles have a size of 2.00mm, greater than 85% of the particles have a US mesh size of 425$\mu$m, less than 5% of the particles have a US mesh size of 40, and less than 2% of the particles have a US mesh size of 70 wherein the pan is less than 1%, the density is 5-10 lbs/ft$^3$ and the moisture is 4-15%.

**10.** The lightweight animal litter composition according to claim 1 wherein the composition is dust free.

**11.** The lightweight animal litter composition according to claim 1 wherein the composition comprises a plurality of particles, the components of the composition all being infused into said particles.

**12.** The lightweight animal litter composition according to claim 11 wherein the litter composition has a particle size of 98.5% between a 4 US Mesh to a 100 US Mesh.

**13.** A method for producing lightweight animal litter composition comprising the following steps:

> providing sodium bentonite dust;
> providing paper;
> providing an aqueous solution;
> preconditioning the paper to form a paper formula;
> grinding the sodium bentonite dust to a size of less than US Mesh 45 and premixing the sodium bentonite dust with one of said additional components to form a clay formula;
> blending the paper formula with the clay formula to form a blend;
> mixing the blend with the aqueous solution to agglomerate the composition into particles with sizes ranging from 4 to 50 US Mesh; and
> heat drying the composition.

**14.** A method according to claim 13 wherein the paper is recycled paper.

**15.** A method according to claim 13 further comprising the step of providing an additional component selected from the group consisting of a pH neutralizer, a deodorizer, a bacterial enzyme and a scent.

Recycled Paper
(ONP) Bales
Received and De
Baled

10

Recycled
Sodium Bentonite
(Clay) Dust
<70 US Mesh

16

Recycled Paper
Shredding
Approximately
1-2 cm in width

12

Sodium Bentonite
(Clay) Dust
Formulation
With, Minerals, pH
Neutralizer, and Dry
Deodorizers

18

22

Aqueous Solution
Made of water (5-
35°C), Antibacterial,
and Liquid Deodorizer
Added to Paper and
Clay mixture at
approximately 10% of
total Stored in a tank

**Aqueous
Component**

Recycled Paper
Grinding
Grind Size
<0.5 mm

14

Preconditioned
or ground
Recycled Paper
loaded into Hopper

**Paper
Component**

34

Sodium Bentonite
Dry Formula loaded
into Hopper

**Clay
Component**

38

24

Aqueous Solution
added to Pin Mixing of
the Paper and Clay
mixture and is Forming
into particle sizes of
>98.5% between
4 and 50 US Mesh

Auger blender to fully
homogeneous mix the paper
and clay components

20

26

Drying the formed
particles to a moisture
content of <14.0%

**FIGURE 1**